# EUROPEAN PATENT APPLICATION

(11) **EP 4 485 423 A1**
(43) Date of publication of application: **01.01.2025**
(21) Application number: 23759933.7
(22) Date of filing: 20.02.2023
(51) Int. Cl.: G08G 1/16, G05D 1/02, G06T 7/70

(54) **ENVIRONMENT RECOGNITION DEVICE AND PROGRAM**

(30) Priority: 24.02.2022 JP 2022027041
(71) Applicant: AISIN CORPORATION, Kariya-shi, Aichi 448-8650 (JP)
(72) Inventor: HAYAKAWA, Kazutaka, Kariya-shi, Aichi 448-8650 (JP); UEDA, Koki, Kariya-shi, Aichi 448-8650 (JP); ASAI, Shoji, Nagakute-shi, Aichi 480-1192 (JP)
(74) Representative: TBK
(86) International application number: PCT/JP2023/006049
(87) International publication number: WO 2023/162932

(57) **Abstract**

There are included a three-dimensional location estimating part that estimates a three-dimensional location of a lighting device in an environment from an image photographed by a photographing device that is mounted on a mobile unit to photograph an environment around the mobile unit; a location information obtaining part that obtains location information of the mobile unit; a road surface reflection region estimating part that estimates a road surface reflection region in an image photographed by the photographing device at a second time point of the mobile unit, based on a three-dimensional location of the lighting device estimated from an image photographed by the photographing device at a first time point of the mobile unit and based on the location information obtained at the second time point, the road surface reflection region being a region where illuminating light radiated from the lighting device is reflected; and an environment recognizing part that recognizes an environment from an image region excluding the road surface reflection region where the illuminating light is reflected.

## Description

### TECHNICAL FIELD

The present invention relates to an environment recognition device and a program.

### BACKGROUND ART

Patent Literature 1 discloses a technique in which a three-dimensional location of a lighting device of an automobile is estimated, a specular reflection region is estimated, assuming that radiated light which is radiated from the lighting device is specularly reflected off a road surface, and the specular reflection region is enlarged or reduced in a distance direction and in a width direction.

### CITATIONS LIST

### PATENT LITERATURE

Patent Literature 1: JP 5892876 B2

### SUMMARY OF INVENTION

### TECHNICAL PROBLEMS

However, in the technique described in Patent Literature 1, a lighting device of an automobile needs to be always captured in an image, and when the lighting device is not captured in an image, a specular reflection region cannot be estimated.

The present invention is made taking into account the above-described fact, and provides an environment recognition device and a program that can prevent erroneous recognition of an environment which is caused by reflection of illuminating light radiated from a lighting device off a road surface, regardless of whether the lighting device is captured in an image.

### SOLUTIONS TO PROBLEMS

An environment recognition device according to a first aspect includes: a three-dimensional location estimating part that estimates a three-dimensional location of a lighting device in an environment from an image photographed by a photographing device that is mounted on a mobile unit to photograph an environment around the mobile unit; a location information obtaining part that obtains location information of the mobile unit; a road surface reflection region estimating part that estimates a road surface reflection region in an image photographed by the photographing device at a second time point of the mobile unit, based on a three-dimensional location of the lighting device estimated from an image photographed by the photographing device at a first time point of the mobile unit and based on the location information obtained at the second time point, the road surface reflection region being a region where illuminating light radiated from the lighting device is reflected; and an environment recognizing part that recognizes an environment from an image region excluding the road surface reflection region where the illuminating light is reflected.

According to the environment recognition device of the first aspect, it becomes possible to provide an environment recognition device that can prevent erroneous recognition of an environment which is caused by reflection of illuminating light radiated from a lighting device off a road surface, regardless of whether the lighting device is captured in an image.

In an environment recognition device according to a second aspect, the three-dimensional location estimating part estimates a three-dimensional location of a lighting device, based on a location in an image of the lighting device and a location in the image of a specular reflection region on a road surface, the specular reflection region being a region where the illuminating light is specularly reflected off a road surface.

According to the environment recognition device of the second aspect, it becomes possible to provide an environment recognition device that can estimate a three-dimensional location of a lighting device.

In an environment recognition device according to a third aspect, the location information obtaining part obtains the location information based on odometry information.

According to the environment recognition device of the third aspect, it becomes possible to provide an environment recognition device that can obtain location information of a mobile unit based on odometry information.

In an environment recognition device according to a fourth aspect, the road surface reflection region is a region extending a predetermined distance from a specular reflection region on a road surface to the mobile unit side and to the lighting device side, the specular reflection region being obtained at the second time point and being a region where the illuminating light is specularly reflected off a road surface.

According to the environment recognition device of the fourth aspect, it becomes possible to provide an environment recognition device that can prevent erroneous recognition by recognizing an environment, excluding, in addition to a specular reflection region, a region around the specular reflection region present between a vehicle and a lighting device.

In an environment recognition device according to a fifth aspect, the road surface reflection region is calculated by changing a size of a specular reflection region on a road surface by multiplying the specular reflection region by a predetermined coefficient, the specular reflection region being obtained at the second time point and being a region where the illuminating light is specularly reflected off a road surface.

According to the environment recognition device of the fifth aspect, it becomes possible to provide an environment recognition device that can calculate a road surface reflection region by changing a specular reflection region according to road surface conditions.

In an environment recognition device according to a sixth aspect, the first time point is a time point at which the lighting device is captured in an image photographed by the photographing device, and the second time point is a time point at which the lighting device is not captured in an image photographed by the photographing device.

According to the environment recognition device of the sixth aspect, it becomes possible to provide an environment recognition device that can prevent erroneous recognition of an environment which is caused by reflection of illuminating light radiated from a lighting device off a road surface, even when the lighting device is not captured in an image at a second time point.

A program according to a seventh aspect causes a computer to function as: a three-dimensional location estimating part that estimates a three-dimensional location of a lighting device in an environment from an image photographed by a photographing device that is mounted on a mobile unit to photograph an environment around the mobile unit; a location information obtaining part that obtains location information of the mobile unit; a road surface reflection region estimating part that estimates a road surface reflection region in an image photographed by the photographing device at a second time point of the mobile unit, based on a three-dimensional location of a lighting device estimated from an image photographed by the photographing device at a first time point of the mobile unit and based on the location information obtained at the second time point, the road surface reflection region being a region where illuminating light radiated from the lighting device is reflected; and an environment recognizing part that recognizes an environment from an image region excluding the road surface reflection region where the illuminating light is reflected.

According to the program of the seventh aspect, it becomes possible to provide a program that can prevent erroneous recognition of an environment which is caused by reflection of illuminating light radiated from a lighting device off a road surface, regardless of whether the lighting device is captured in an image.

### ADVANTAGEOUS EFFECTS OF INVENTION

The present invention has an advantageous effect of being able to prevent erroneous recognition of an environment which is caused by reflection of illuminating light radiated from a lighting device off a road surface, regardless of whether the lighting device is captured in an image.

### BRIEF DESCRIPTION OF DRAWINGS

FIG. 1 is a block diagram showing an example of a configuration of an environment recognition system according to the present embodiment.
FIG. 2 is a schematic block diagram of an environment recognition device according to the present embodiment.
FIG. 3 is a block diagram showing an example of functional components of the environment recognition device according to the present embodiment.
FIG. 4 is an illustrative diagram for describing an example of an image photographed before movement of a vehicle according to the present embodiment.
FIG. 5 is an illustrative diagram for describing an example of estimation of a three-dimensional location of a lighting device according to the present embodiment.
FIG. 6 is an illustrative diagram for describing an example of odometry information of the vehicle and a road surface reflection region present after movement according to the present embodiment.
FIG. 7 is an illustrative diagram for describing an example of estimation of the road surface reflection region according to the present embodiment.
FIG. 8 is an illustrative diagram for describing an example of estimation of a road surface reflection region according to the present embodiment.
FIG. 9 is an illustrative diagram for describing an example of an image after movement of the vehicle according to the present embodiment.
FIG. 10 is an illustrative diagram for describing an example of a flow of operation of the environment recognition device according to the present embodiment.

### DESCRIPTION OF EMBODIMENTS

An example of the present embodiment will be described in detail below with reference to the drawings.

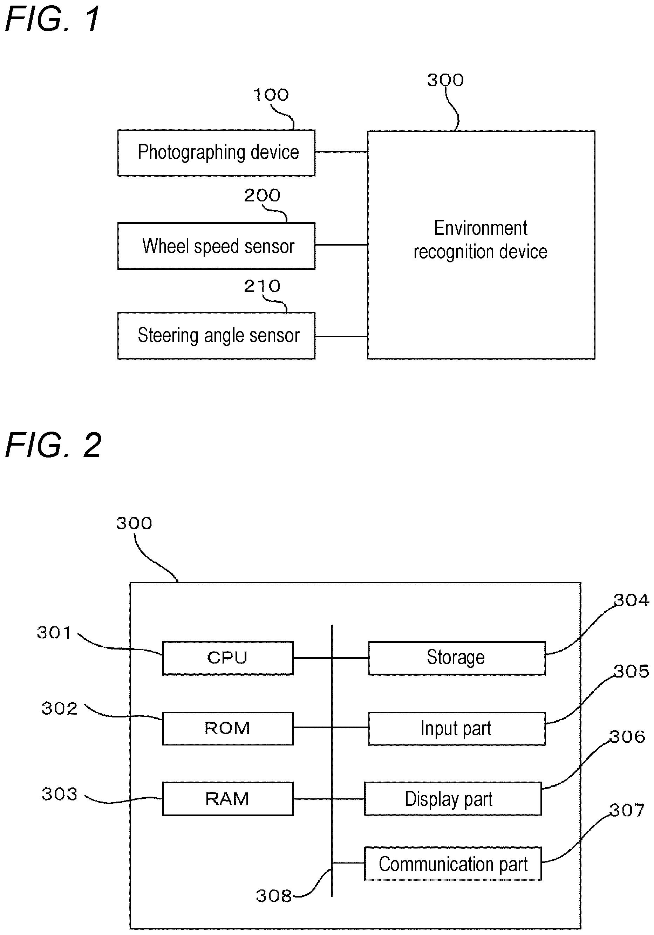

As shown in FIG. 1, an environment recognition system 10 according to the present embodiment includes a photographing device 100, a wheel speed sensor 200, a steering angle sensor 210, and an environment recognition device 300.

The photographing device 100 is mounted on a mobile unit to photograph an environment around the mobile unit. In the present embodiment, a vehicle is described as an example of the mobile unit.

In addition, the photographing device 100 photographs an image before movement of the vehicle and an image after movement of the vehicle. Here, the "before movement" is an example of a first time point. In addition, the image before movement is an image obtained when a driver, etc., of the vehicle has performed an operation for automatic parking by switching the vehicle into autonomous driving mode in a parking lot, etc. Note that the image before movement is not limited to an image obtained when the vehicle is being stopped, and also includes an image obtained at a give time point during movement. In addition, the "after movement" is an example of a second time point. In addition, the image after movement is an image obtained when the vehicle has moved after performing, by the driver, etc., of the vehicle, an operation for automatic parking by switching the vehicle into autonomous driving mode in a parking lot, etc. Note that the image after movement is not limited to an image obtained when the vehicle is being stopped, and also includes an image obtained at a give time point during movement. In addition, an image is not limited to one photographed triggered by the driver, etc., of the vehicle performing an operation for automatic parking by switching the vehicle into autonomous driving mode in a parking lot, etc., and an image may be photographed when the vehicle speed of the vehicle is in a predetermined vehicle speed range or may be photographed at all times.

The photographing device 100 is a single-lens camera provided at any location of the vehicle, e.g., the side, and photographs, for example, an area in front of or to the side or rear of the vehicle. Note that the photographing device 100 is not limited to being provided at the side of the vehicle, and may be provided at the front, the rear, etc., or may be provided at a plurality of locations. Note also that the photographing device 100 is not limited to a single-lens camera and may be a compound-eye camera.

The photographing device 100 passes the photographed images to the environment recognition device 300.

The wheel speed sensor 200 detects a wheel speed of four wheels of the vehicle and passes the detected wheel speed to the environment recognition device 300.

The steering angle sensor 210 detects a steering angle of the vehicle and passes the detected steering angle to the environment recognition device 300.

Next, the environment recognition device 300 will be described using FIG. 2.

FIG. 2 is a block diagram showing a hardware configuration of the environment recognition device 300 according to the present embodiment.

As shown in FIG. 2, the environment recognition device 300 includes a central processing unit (CPU) 301 which is an example of a processor, a read only memory (ROM) 302, a random access memory (RAM) 303, a storage 304, an input part 305, a display part 306, and a communication part 307. The components are connected to each other through a bus 308 such that they can communicate with each other.

The CPU 301 is a central processing unit, and executes various types of programs or controls each part. Namely, the CPU 301 reads a program from the ROM 302 or the storage 304 and executes the program using the RAM 303 as a working area. The CPU 301 controls the above-described components and performs various types of arithmetic processing, according to a program recorded in the ROM 302 or the storage 304. In the present embodiment, the ROM 302 or the storage 304 has programs stored therein.

The ROM 302 stores various types of programs and various types of data. The RAM 303 serves as a working area and temporarily stores a program or data. The storage 304 includes a hard disk drive (HDD) or a solid state drive (SSD), and stores various types of programs including an operating system and various types of data.

The input part 305 includes a pointing device such as a mouse and a keyboard, and is used to perform various types of input.

The display part 306 is, for example, a liquid crystal display. The display part 306 displays various types of information based on control performed by the CPU 301. In addition, the display part 306 may adopt a touch panel system, thereby functioning as the input part 305.

The communication part 307 is for communicating with the photographing device 100, the wheel speed sensor 200, the steering angle sensor 210, etc.

The environment recognition device 300 implements various types of functions, using the above-described hardware resources. Functional components implemented by the environment recognition device 300 will be described.

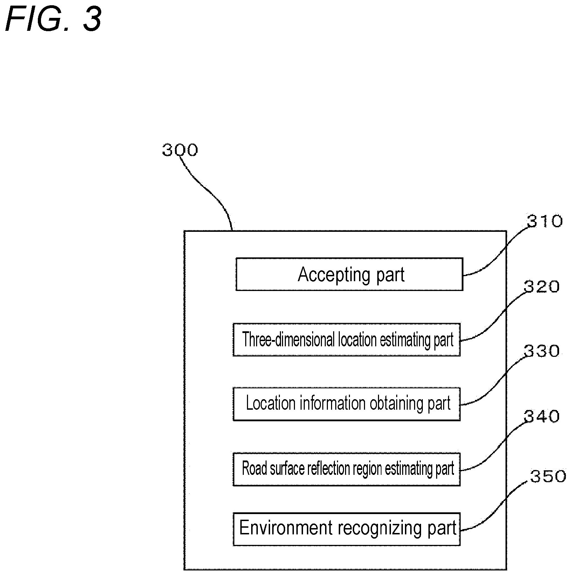

FIG. 3 is a block diagram showing an example of functional components of the environment recognition device 300.

As shown in FIG. 3, the environment recognition device 300 includes, as functional components, an accepting part 310, a three-dimensional location estimating part 320, a location information obtaining part 330, a road surface reflection region estimating part 340, and an environment recognizing part 350. Each functional component is implemented by the CPU 301 reading and executing a program stored in the storage 304.

The accepting part 310 accepts input of images photographed by the photographing device 100, a wheel speed detected by the wheel speed sensor 200, and a steering angle detected by the steering angle sensor 210. In addition, the accepting part 310 passes the accepted images to the three-dimensional location estimating part 320 and the road surface reflection region estimating part 340. In addition, the accepting part 310 passes the accepted wheel speed and steering angle to the location information obtaining part 330.

The three-dimensional location estimating part 320 estimates a three-dimensional location of a lighting device L in an environment from an image photographed by the photographing device 100. Specifically, the three-dimensional location estimating part 320 estimates a three-dimensional location of the lighting device L, based on the location in an image of the lighting device L and the location in the image of a specular reflection region M on a road surface that is a region where illuminating light radiated from the lighting device L is specularly reflected off the road surface. Here, the three-dimensional location of the lighting device L is a relative location between the vehicle and the lighting device L and includes, for example, a distance from the vehicle and information on height from the ground.

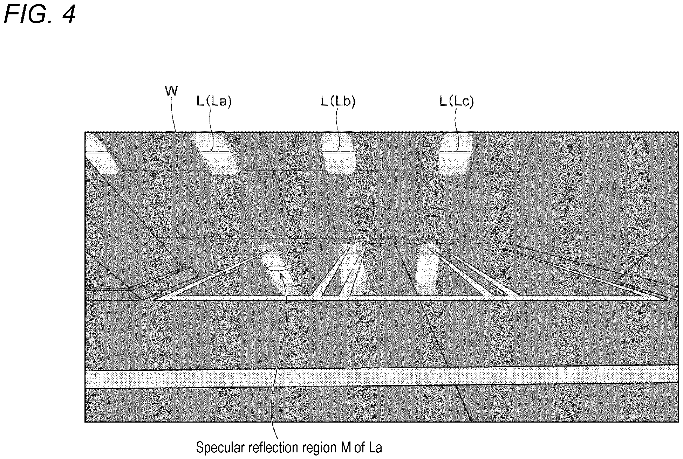

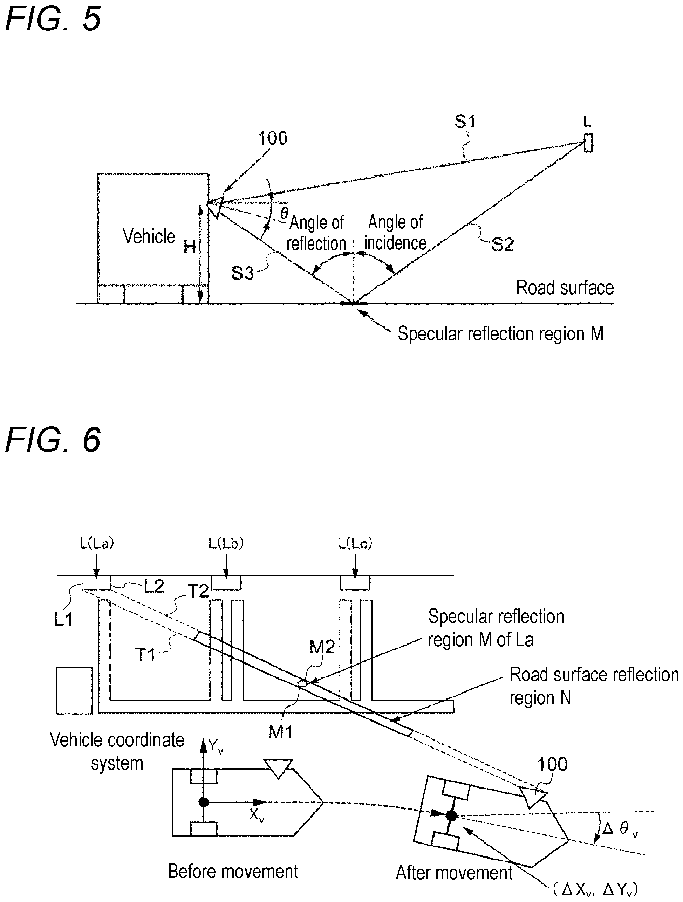

More specifically, the three-dimensional location estimating part 320 first extracts, as a lighting device L, a region having a higher luminance value than a predetermined threshold value T1 from an image photographed by the photographing device 100 before movement which is shown in FIG. 4. Then, a region present below the extracted lighting device L and having a luminance value higher than a predetermined threshold value T2 and lower than the threshold value T1 is extracted as a specular reflection region M. Then, as shown in FIG. 5, a three-dimensional location of the lighting device L is estimated from information on the angle of depression θ of the photographing device 100 and the height H of the photographing device 100 from a road surface which are measured in advance, a straight line S 1 that connects the center of the lens of the photographing device 100 to the location in the image of the lighting device L, a straight line S3 that connects the center of the lens of the photographing device 100 to the location in the image of the specular reflection region M, and a straight line S2 obtained by allowing the straight line S3 to be reflected off the road surface, assuming that illuminating light radiated from the lighting device L is specularly reflected off the road surface (the angle of incidence is substantially equal to the angle of reflection). Note that when there are a plurality of lighting devices L (a lighting device La, a lighting device Lb, and a lighting device Lc), the same process is performed for all lighting devices L (the lighting device La, the lighting device Lb, and the lighting device Lc).

Here, the lighting device L is mainly a light fixed on a wall, etc., but is not limited thereto and also includes a light of a traveling vehicle, etc.

Then, the three-dimensional location estimating part 320 passes the estimated three-dimensional location of the lighting device L to the road surface reflection region estimating part 340.

The location information obtaining part 330 obtains location information of the vehicle. In the present embodiment, odometry information is obtained as the location information of the vehicle. The location information obtaining part 330 obtains odometry information by computing, as shown in FIG. 6, the amount of change in location (ΔXᵥ, ΔYᵥ) of the vehicle and the amount of change in yaw angle Δθᵥ of the vehicle, using the wheel speed sensor 200 and the steering angle sensor 210.

Specifically, the location information obtaining part 330 first calculates a distance traveled by the vehicle based on a wheel speed, and calculates a turning radius of the vehicle based on a steering angle. Then, as shown in FIG. 6, the location information obtaining part 330 computes the amount of change in location (ΔXᵥ, ΔYᵥ) of the vehicle and the amount of change in yaw angle Δθᵥ of the vehicle in a vehicle coordinate system, from the distance traveled by the vehicle and the turning radius of the vehicle.

Then, the location information obtaining part 330 passes the obtained odometry information (the amount of change in location (ΔXᵥ, ΔYᵥ) of the vehicle and the amount of change in yaw angle Δθᵥ of the vehicle) to the road surface reflection region estimating part 340.

Note that the location information is not limited to odometry information and may be, for example, information obtained by a global positioning system (GPS), etc.

Based on the three-dimensional location of the lighting device L estimated from the image photographed by the photographing device 100 before movement of the vehicle and the odometry information obtained after movement of the vehicle, the road surface reflection region estimating part 340 estimates a road surface reflection region N in an image photographed by the photographing device 100 after the movement, the road surface reflection region N being a region where illuminating light radiated from the lighting device L is reflected.

Specifically, first, as shown in FIG. 6, based on the three-dimensional location of the lighting device L and the odometry information of the vehicle obtained after movement (the amount of change in location (ΔXᵥ, ΔYᵥ) of the vehicle and the amount of change in yaw angle Δθᵥ of the vehicle), the road surface reflection region estimating part 340 estimates a three-dimensional location of a specular reflection region M present after movement.

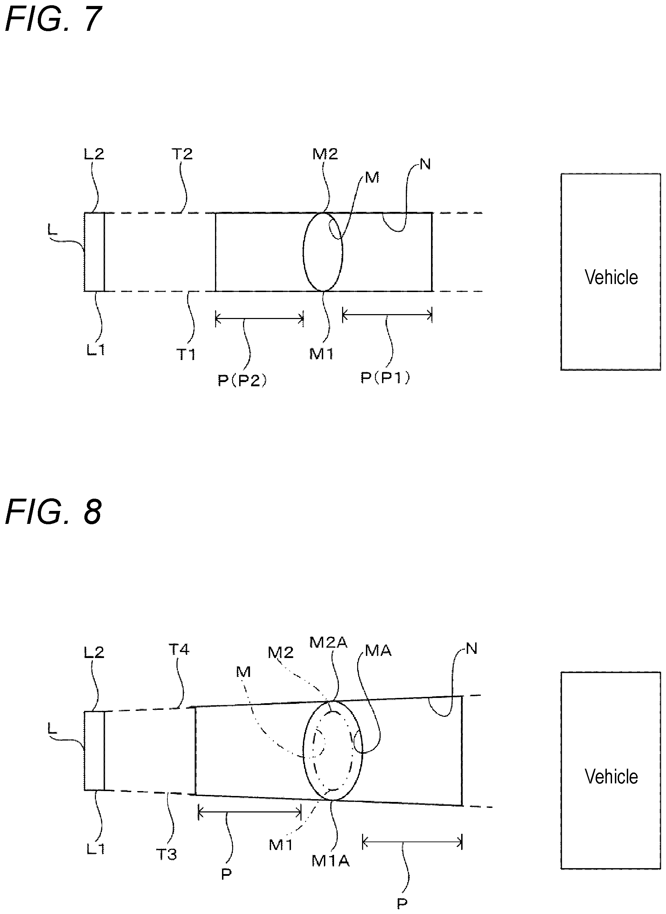

Then, as shown in FIGS. 6 and 7, the road surface reflection region estimating part 340 estimates, as a road surface reflection region N, a region that is present between a straight line T1 connecting a left edge location L1 of the estimated lighting device L to a left-edge-side location M1 of the estimated specular reflection region M and a straight line T2 connecting a right edge location L2 of the estimated lighting device L to a right-edge-side location M2 of the estimated specular reflection region M and that extends a predetermined distance P, e.g., 5 meters, from the specular reflection region M to a vehicle side and to a lighting device L side.

Note that the estimation of a road surface reflection region N is not limited to a case in which a region extending the predetermined distance P from the specular reflection region M to the vehicle side and to the lighting device L side is estimated as a road surface reflection region N. For example, a road surface reflection region N may be estimated by changing the region extending the distance P from the specular reflection region M to the vehicle side and to the lighting device L side, according to a distance between the vehicle and the lighting device L (the length of the straight line S1 that connects the center of the lens of the photographing device 100 to the location in the image of the lighting device L), or a road surface reflection region N may be estimated by changing the region extending the distance P from the specular reflection region M to the vehicle side and to the lighting device L side, according to the height of the lighting device L from the road surface, or a road surface reflection region N may be estimated by changing the region extending the distance P from the specular reflection region M to the vehicle side and to the lighting device L side, according to the distance between the vehicle and the lighting device L and the height of the lighting device L. In addition, a distance P1 from the specular reflection region M to the vehicle side and a distance P2 from the specular reflection region M to the lighting device L side are not limited to being the same distance P, and the distance P1 from the specular reflection region M to the vehicle side may be longer or shorter than the distance P2 from the specular reflection region M to the lighting device L side.

In addition, taking into account the fact that on an actual road surface, the angle of reflection at which light from the lighting device L is reflected off the road surface is not equal to the angle of incidence and complete specular reflection is not obtained, as shown in FIG. 8, a road surface reflection region N may be estimated by changing the left-edge-side location M1 and right-edge-side location M2 of the specular reflection region M, based on a region MA obtained by changing the specular reflection region M in size in a distance direction from the vehicle and in size in a width direction orthogonal to the distance direction. Namely, as a road surface reflection region N, a region is estimated that is present between a straight line T3 connecting the left edge location L1 of the estimated lighting device L to M1A obtained by changing the left-edge-side location M1 of the estimated specular reflection region M in the width direction and a straight line T4 connecting the right edge location L2 of the estimated lighting device L to M2A obtained by changing the right-edge-side location M2 of the estimated specular reflection region M in the width direction and that extends a predetermined distance P, e.g., 5 meters, from a location where the specular reflection region M is changed in the distance direction, to the vehicle side and to the lighting device L side. Here, the changes in size in the distance direction and in size in the width direction of the specular reflection region M are made by multiplying the specular reflection region M by a predetermined coefficient, e.g., "1.1".

Note that the estimation of a road surface reflection region N is not limited to a case in which a road surface reflection region N is estimated based on the region MA obtained by enlarging the specular reflection region M in the distance direction and in the width direction, and after estimating a road surface reflection region N from the specular reflection region M that is not enlarged, the estimated road surface reflection region N may be enlarged in the distance direction and in the width direction. In addition, a road surface reflection region N may be estimated by enlarging only either one of the distance direction and width direction of the specular reflection region M.

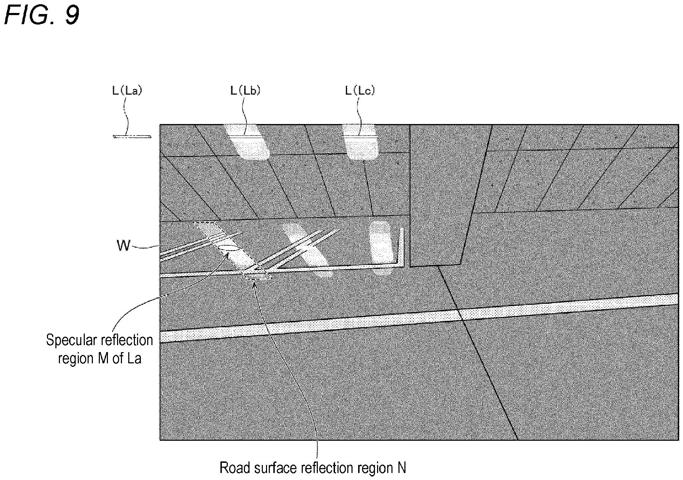

Then, the road surface reflection region estimating part 340 superimposes a three-dimensional location of the estimated road surface reflection region N on an image after movement which is shown in FIG. 9, and computes a location in the image of the road surface reflection region N. Namely, as shown in FIG. 9, even if the lighting device L is not captured in the image after movement, a location in the image of a road surface reflection region N created by illuminating light radiated from the lighting device L can be computed.

Then, the road surface reflection region estimating part 340 passes the estimated road surface reflection region to the environment recognizing part 350.

The environment recognizing part 350 recognizes an environment from an image region excluding the road surface reflection region N in an image photographed by the photographing device 100, particularly, an image after movement, the road surface reflection region N being a region where illuminating light radiated from the lighting device is reflected. Here, the environment includes, for example, features such as white lines W painted on a road surface, a corner of a structure, and a corner of a pattern of the road surface. Namely, since a difference in luminance is small in the road surface reflection region N, erroneous recognition of an environment included in the road surface reflection region N is likely to occur, but since an environment is recognized using an image region excluding the road surface reflection region N, erroneous recognition can be prevented. In addition, in an area around the specular reflection region M, illuminating light irradiated from the lighting device L, though weak, is reflected, and thus, the road surface reflection region N can also become a cause of erroneous recognition upon recognizing an environment. Thus, by recognizing an environment from an image region excluding not only the specular reflection region M but also the road surface reflection region N, erroneous recognition is prevented.

Using the environment recognized by the environment recognizing part 350, image recognition in vehicle's autonomous driving, etc., is performed.

Next, the action of the environment recognition device 300 will be described.

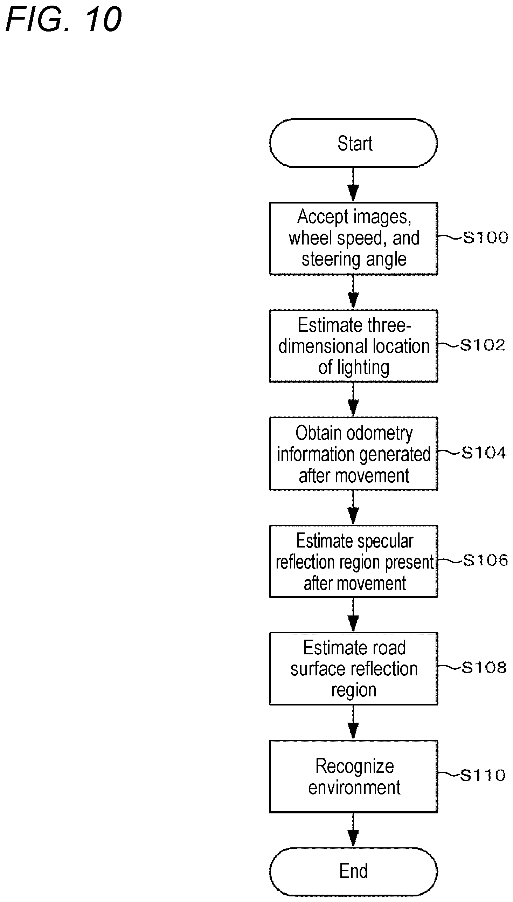

FIG. 10 is an illustrative diagram showing an example of a flow of operation of the environment recognition device 300.

First, at step S100, the accepting part 310 accepts images from the photographing device 100, a wheel speed from the wheel speed sensor 200, and a steering angle from the steering angle sensor 210. Then, processing proceeds to the next step S102.

At step S102, the three-dimensional location estimating part 320 estimates a three-dimensional location of a lighting device L. Then, processing proceeds to the next step S104.

At step S104, the location information obtaining part 330 obtains odometry information of the vehicle generated after movement (the amount of change in location (ΔX_{V}, ΔYᵥ) of the vehicle and the amount of change in yaw angle Δθᵥ of the vehicle). Then, processing proceeds to the next step S106.

At step S106, the road surface reflection region estimating part 340 estimates a three-dimensional location of a specular reflection region M present after movement, based on the three-dimensional location of the lighting device L estimated at the above-described step S102 and the odometry information of the vehicle generated after movement (the amount of change in location (ΔXᵥ, ΔYᵥ) of the vehicle and the amount of change in yaw angle Δθᵥ of the vehicle). Then, processing proceeds to the next step S108.

At step S108, the road surface reflection region estimating part 340 estimates a road surface reflection region N by multiplying the specular reflection region M estimated at the above-described step S 106 by a coefficient. Then, processing proceeds to the next step S110.

At step S110, the environment recognizing part 350 recognizes an environment around the vehicle. Then, the process ends.

Note that the process starts, for example, when the driver, etc., of the vehicle has performed an operation for automatic parking by switching the vehicle into autonomous driving mode in a parking lot, etc., or the vehicle speed of the vehicle has reached within a predetermined vehicle speed range, or when the photographing device 100 has captured something bright.

As described above, according to the present embodiment, it becomes possible to provide the environment recognition device 300 that can prevent erroneous recognition of an environment which is caused by reflection of illuminating light radiated from a lighting device L off a road surface, regardless of whether the lighting device is captured in an image. Namely, based on a three-dimensional location of the lighting device L and odometry information of the vehicle, an orientation of the lighting device L in an image after movement of the vehicle is estimated. Then, in the image after movement, a location in the image of a road surface reflection region N where illuminating light radiated from the lighting device L is reflected off the road surface is estimated. In the road surface reflection region N where illuminating light radiated from the lighting device L is reflected off the road surface, a difference in luminance is small due to blown-out highlights, etc., and thus, erroneous recognition of an environment such as white lines Wand features is likely to occur, but as in the present embodiment, by recognizing an environment using an image region excluding the road surface reflection region N where illuminating light radiated from the lighting device L is reflected off the road surface, it becomes possible to prevent erroneous recognition of an environment.

Note that the present invention is not limited to the above-described embodiment, and it is possible to make various changes thereto other than those described above without departing from the spirit and scope of the present invention.

For example, the environment recognition device 300 is not limited to being mounted on a vehicle, and may be connected to a vehicle through wireless communication such as the Internet.

In addition, although, in the above-described embodiment, the specular reflection region M is changed in size in the distance direction and in size in the width direction by multiplying the specular reflection region M by a predetermined coefficient, the changes may be made using other conditions. For example, the coefficient may be changed depending on the magnitude of the luminance value of the lighting device L. Namely, a road surface reflection region N may be estimated by changing the specular reflection region M by multiplying by a larger coefficient for a higher luminance value of the lighting device L. On the other hand, when the luminance value of the lighting device L is lower than a threshold value, a road surface reflection region N may be estimated from a specular reflection region M that is not changed in size by not multiplying by a coefficient.

In addition, the size of the specular reflection region M may be changed by multiplying by a coefficient that is determined in advance by weather. For example, in a case of rainy weather, multiplication by a coefficient that is determined in advance for the rainy weather may be performed. In this case, the driver, etc., of the vehicle may input the fact that it is rainy weather to the environment recognition device 300, or a rain gauge, a rain sensor, etc., may be provided in the vehicle so that the environment recognition device 300 can recognize weather without the need for driver's input.

In addition, the size of the specular reflection region M may be changed by multiplying by a coefficient that is determined in advance by road surface conditions. For example, a coefficient for road surface conditions being asphalt and a coefficient for road surface conditions being soil may be determined in advance. In this case, the driver, etc., of the vehicle may input the fact that the road surface conditions are soil, or by recognizing an image photographed by a camera that photographs a road surface, the environment recognition device 300 may recognize road surface conditions without the need for driver's input.

### REFERENCE SIGNS LIST

100: Photographing device, 200: Wheel speed sensor, 210: Steering angle sensor, 300: Environment recognition device, 310: Accepting part, 320: Three-dimensional location estimating part, 330: Location information obtaining part, 340: Road surface reflection region estimating part, and 350: Environment recognizing part

## Claims

1. An environment recognition device comprising:
a three-dimensional location estimating part that estimates a three-dimensional location of a lighting device in an environment from an image photographed by a photographing device that is mounted on a mobile unit to photograph an environment around the mobile unit;
a location information obtaining part that obtains location information of the mobile unit;
a road surface reflection region estimating part that estimates a road surface reflection region in an image photographed by the photographing device at a second time point of the mobile unit, based on a three-dimensional location of the lighting device estimated from an image photographed by the photographing device at a first time point of the mobile unit and based on the location information obtained at the second time point, the road surface reflection region being a region where illuminating light radiated from the lighting device is reflected; and
an environment recognizing part that recognizes an environment from an image region excluding the road surface reflection region where the illuminating light is reflected.

2. The environment recognition device according to claim 1, wherein the three-dimensional location estimating part estimates a three-dimensional location of a lighting device, based on a location in an image of the lighting device and a location in the image of a specular reflection region on a road surface, the specular reflection region being a region where the illuminating light is specularly reflected off a road surface.

3. The environment recognition device according to claim 1, wherein the location information obtaining part obtains the location information based on odometry information.

4. The environment recognition device according to claim 1, wherein the road surface reflection region is a region extending a predetermined distance from a specular reflection region on a road surface to the mobile unit side and to the lighting device side, the specular reflection region being obtained at the second time point and being a region where the illuminating light is specularly reflected off a road surface.

5. The environment recognition device according to claim 1, wherein the road surface reflection region is calculated by changing a size of a specular reflection region on a road surface by multiplying the specular reflection region by a predetermined coefficient, the specular reflection region being obtained at the second time point and being a region where the illuminating light is specularly reflected off a road surface.

6. The environment recognition device according to any one of claims 1 to 5, wherein
the first time point is a time point at which the lighting device is captured in an image photographed by the photographing device, and
the second time point is a time point at which the lighting device is not captured in an image photographed by the photographing device.

7. A program for causing a computer to function as:
a three-dimensional location estimating part that estimates a three-dimensional location of a lighting device in an environment from an image photographed by a photographing device that is mounted on a mobile unit to photograph an environment around the mobile unit;
a location information obtaining part that obtains location information of the mobile unit;
a road surface reflection region estimating part that estimates a road surface reflection region in an image photographed by the photographing device at a second time point of the mobile unit, based on a three-dimensional location of a lighting device estimated from an image photographed by the photographing device at a first time point of the mobile unit and based on the location information obtained at the second time point, the road surface reflection region being a region where illuminating light radiated from the lighting device is reflected; and
an environment recognizing part that recognizes an environment from an image region excluding the road surface reflection region where the illuminating light is reflected.
